# EUROPEAN PATENT APPLICATION

(11) **EP 4 836 092 A1**
(43) Date of publication of application: **04.11.2026**
(21) Application number: 24912726.7
(22) Date of filing: 23.12.2024
(51) Int. Cl.: H01M 10/6555, H01M 10/613, H01M 10/6554, H01M 50/204, H01M 50/213, H01M 50/291

(54) **POWER STORAGE MODULE**

(30) Priority: 28.12.2023 JP 2023222168
(71) Applicant: Panasonic Intellectual Property Management Co., Ltd., Kadoma-shi, Osaka 571-0057 (JP)
(72) Inventor: MURAYAMA, Chifumi, Osaka 571-0057 (JP)
(74) Representative: Eisenführ Speiser
(86) International application number: PCT/JP2024/045462
(87) International publication number: WO 2025/142839

(57) **Abstract**

A power storage module (battery module) that accommodates a plurality of power storage devices (batteries) includes a holder that accommodates one end side of the plurality of power storage devices and holds the plurality of power storage devices in a state where the plurality of power storage devices are separated from each other, and a heat radiator including a plurality of rods each disposed between a pair of power storage devices among the plurality of power storage devices and extending in a first direction, and a flat plate disposed on a surface of the holder opposite to the plurality of power storage devices, to which one end of each of the plurality of rods is connected.

## Description

### TECHNICAL FIELD

The present disclosure relates to a power storage module including a plurality of power storage devices.

### BACKGROUND ART

Conventionally, a power storage module accommodates a plurality of power storage devices, the plurality of power storage devices are connected in parallel and in series, and thus, predetermined capacity and voltage are obtained. Examples of the power storage device include a secondary battery such as a lithium-ion battery and a capacitor.

In the conventional power storage module, the power storage device generates heat in accordance with charge and discharge, and therefore needs to be cooled. In a case where an abnormality in which a large current flows occurs in a power storage device, the power storage device may be heated to a high temperature, which may adversely affect surrounding power storage devices.

Here, a power storage module as a power source for an electric bicycle, a vacuum cleaner, or the like is required to have a small capacity and be relatively inexpensive, and thus is hard to be provided with a sufficient cooling mechanism. On the other hand, demand for miniaturization and weight reduction is significant, and an increase in power density of the power storage device will make cooling a bigger problem.

There are various cooling mechanisms, and PTL 1 discloses that a cooling system using a coolant is adopted, and when gas is generated due to abnormality of a battery, the gas is not directly discharged to the outside, but is discharged to the outside through another space in a battery pack to suppress outflow of the coolant to the outside.

### Citation List

### Patent Literature

PTL 1: Unexamined Japanese Patent Publication No. 2008-276997

### SUMMARY OF THE INVENTION

A power storage module of the present disclosure accommodates a plurality of power storage devices and includes a holder that accommodates one end side of the plurality of power storage devices and holds the plurality of power storage devices in a state where the plurality of power storage devices are separated from each other, and a heat radiator including a plurality of rods each disposed between a pair of power storage devices among the plurality of power storage devices and extending in a first direction, and a flat plate disposed on a surface of the holder opposite to the plurality of power storage devices, to which one end of each of the plurality of rods is connected.

The present disclosure can provide a highly reliable power storage module.

### BRIEF DESCRIPTION OF THE DRAWINGS

Fig. 1 is an exploded perspective view showing a configuration of a main part of a power storage module according to an exemplary embodiment.
Fig. 2 is a sectional view showing the configuration of the main part of the power storage module according to the exemplary embodiment.
Fig. 3 is a sectional view showing a peripheral portion of one battery 12 of an inter-cell member.
Fig. 4 is an exploded perspective view showing a configuration of a main part of another configuration example of the power storage module.
Fig. 5 is a sectional view showing the configuration of the main part of the other configuration example of the power storage module.
Fig. 6 is a perspective view showing a modification of a rod.

### DESCRIPTION OF EMBODIMENT

Hereinafter, exemplary embodiments of the present disclosure will be described below with reference to the drawings. Note that the following exemplary embodiments do not limit the present disclosure, and a configuration obtained by selectively combining a plurality of examples is also included in the present disclosure.

### [Overall configuration]

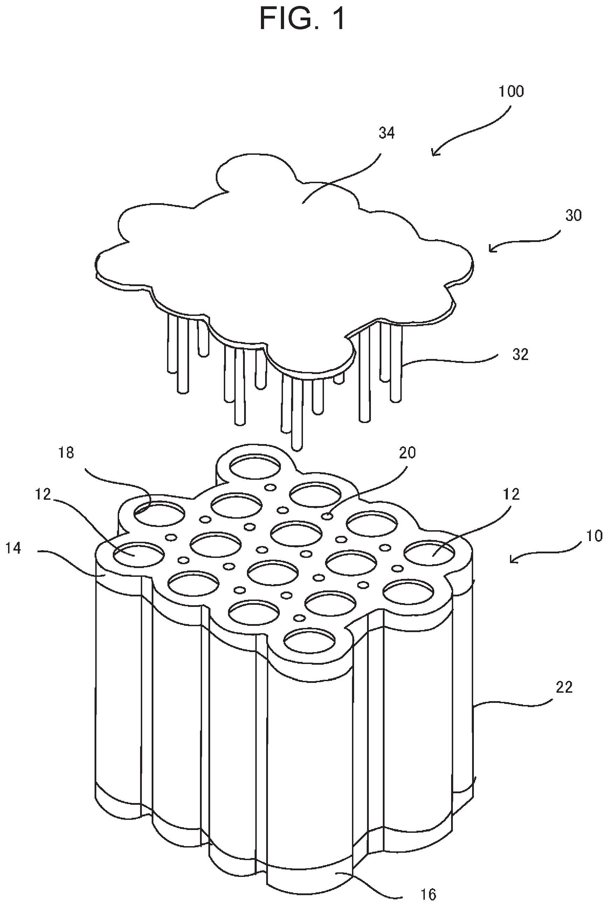

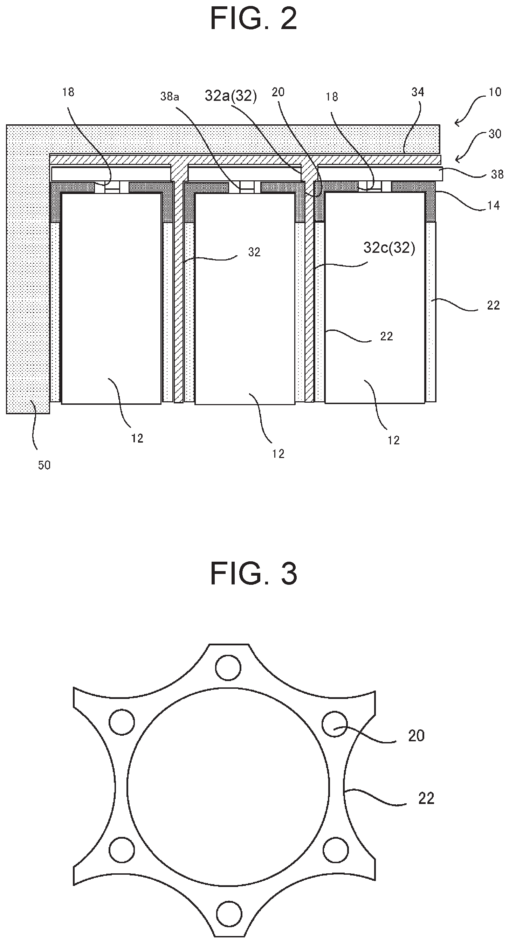

Fig. 1 is an exploded perspective view showing a configuration of a main part of a power storage module according to an exemplary embodiment. Fig. 2 is a sectional view showing the main part of the configuration. In the present exemplary embodiment, a cylindrical lithium-ion battery is adopted as an example of a power storage device, and the power storage module is battery module 100 that accommodates a plurality of batteries 12 (lithium-ion batteries). In the present disclosure, battery 12 may be referred to as a "power storage device", and battery module 100 may be referred to as a "power storage module".

Battery 12 has a cylindrical shape, and is provided with a positive electrode on one end side and a negative electrode on the other end side. An example of the configuration of battery 12 may include an electrode body in which a positive electrode plate and a negative electrode plate having a band shape are wound with a separator interposed therebetween, an exterior can having a cylindrical shape with an electrolyte, a conductive sealing body that closes an opening of the exterior can, a gasket that electrically insulates between the sealing body and the exterior can, an internal negative electrode lead that electrically connects the negative electrode plate and a bottom of the exterior can in the exterior can, and an internal positive electrode lead that electrically connects the positive electrode plate and the sealing body. The gasket may cover an upper surface, a lower surface, and an outer peripheral surface connecting the upper surface and the lower surface of the sealing body, may be provided on an outer peripheral surface of the exterior can, and may be sandwiched in a winding axis direction of the electrode body between a groove protruding on an inner peripheral surface of the exterior can and a caulking portion obtained by bending the opening of the exterior can inward to seal the inside of the exterior can. An upper end of battery 12 is accommodated in upper holder 14, and a lower end is accommodated in lower holder 16. Hereinafter, regarding the contents common to upper holder 14 and lower holder 16, the two holders may be collectively referred to as a holder. Upper holder 14 and lower holder 16 have shapes substantially similar to each other, and have a plurality of containers that cover an upper part and a lower part of cylindrical battery 12, respectively. In the holder, the containers formed by recesses are formed at predetermined intervals by a wall facing an end surface of one battery 12 and a side wall extending along a side peripheral surface of battery 12, and an end of battery 12 is accommodated in the recess. A plurality of openings 18 is provided at a center of the wall, and electrode terminals provided on an upper end surface and a lower end surface of battery 12 are exposed. The holder can be constituted by an insulating material, for example, resin. In the holder, one of upper holder 14 or lower holder 16 may be provided with an opening through which the terminals of both electrodes are exposed.

In this example, since four batteries 12 are provided in one row along a predetermined plane, four rows are provided, and a total of 16 batteries are provided, 16 openings 18 are provided. The four openings in one row are linearly arranged, but are deviated by a half pitch from the next row. Small hole 20 is provided in a region between opening 18 and opening 18. In this example, six small holes 20 (or referred to as insertion holes) are provided between the rows. Here, 16 batteries 12 in Fig. 1 are collectively referred to as battery block 10. In the present exemplary embodiment, two battery blocks (first group, second group) are disposed with a flat plate of a heat radiator (described later) interposed therebetween.

Inter-cell member 22 is disposed in a region between the plurality of batteries 12 between upper holder 14 and lower holder 16, that is, around an intermediate part on an outer peripheral surface of battery 12. Small hole 20 from upper holder 14 may also be continuously provided in inter-cell member 22. Inter-cell member 22 can also be constituted by resin, and may be particularly constituted by a heat insulating material. For example, foamed resin containing bubbles can be used. With elasticity, gaps between batteries 12 can be filled without a space.

Current collector 38 (see Fig. 2) is disposed on a surface of each wall of upper holder 14 and lower holder 16 opposite to a surface facing battery 12. Current collector 38 has lead 38a at a position corresponding to opening 18 of upper holder 14, and is connected to an electrode terminal (for example, a positive electrode terminal) located on an upper surface of battery 12 by lead 38a. Current collector 38 connects the positive electrodes of the plurality of batteries 12 in parallel by connecting the plurality of electrode terminals. For example, one set of batteries 12 connected in parallel and another set of batteries 12 connected in parallel can be connected in series by connecting a current collector connected to a negative electrode of one set of batteries 12 to a current collector connected to a positive electrode of another set. For example, one row of four batteries 12 can be connected in parallel, and four rows can be connected in series. In this case, current collector 38 in the first row serves as a positive electrode current collector, the current collector in the last row serves as a negative electrode current collector, a positive electrode terminal is connected to the positive electrode current collector, and a negative electrode terminal is connected to the negative electrode current collector.

Then, heat radiator 30 is disposed on current collector 38. As shown in Fig. 2, heat radiator 30 includes a plurality of rods 32 that penetrate through small holes 20 formed in upper holder 14 and inter-cell member 22 and extend along side surfaces of the plurality of batteries 12 (in a first direction), and flat plate 34 that is disposed on a surface of a wall of the holder opposite to a surface facing the plurality of power storage devices and to which one end of each of the plurality of rods 32 is connected. Fig. 2 shows a portion in which flat plate 34 is provided on upper holder 14 and rods 32 are extended downward. However, flat plate 34 may be provided below lower holder 16, and rods 32 may be extended upward, or both configurations may be provided. Rod 32 may extend to an entire side of battery 12 or may extend only to a part of battery 12. In the power storage module of the present disclosure, the flat plate of the heat radiator may be disposed between the current collector and the holder.

In this example, in rod 32, portion 32c (first region) to be inserted into small hole 20 and large-diameter portion 32a (second region) thicker than the first region are formed at a root connected to flat plate 34. Large-diameter portion 32a, which has a diameter larger than a diameter of small hole 20, is not inserted into small hole 20. Therefore, a space corresponding to a length of large-diameter portion 32a can be secured between upper holder 14 and flat plate 34. Current collector 38 is disposed in the space between upper holder 14 and flat plate 34.

Similarly, lower current collector 38 and lower heat radiator 30 can also be provided below lower holder 16. In this case, rod 32 of lower heat radiator 30 extends upward from below. A tip of upper rod 32 can reach substantially the same position as a tip of lower rod 32.

Battery 12, upper holder 14, lower holder 16, inter-cell member 22, current collector 38, heat radiator 30, and the like are accommodated in case 50. Case 50 accommodates these components and has a positive electrode terminal and a negative electrode terminal of battery module 100 to enable connection with an external circuit.

In this manner, in the present exemplary embodiment, heat radiator 30 including flat plate 34 and rod 32 is provided, and rod 32 extends between batteries 12 adjacent to small hole 20 provided in upper holder 14 and inter-cell member 22. Heat radiator 30 is constituted by a material having higher heat conduction than upper holder 14, lower holder 16, and inter-cell member 22. Therefore, heat received by rod 32 is quickly transmitted to flat plate 34. An upper surface and a side surface of flat plate 34 are in contact with case 50. At least a part of flat plate 34 is in contact with case 50. Therefore, the heat from rod 32 can also be diffused to the case.

When one battery 12 generates heat due to an abnormality such as an internal short circuit and the temperature of the battery becomes high, inter-cell member 22 prevents the heat from being transmitted to the surroundings, particularly adjacent batteries 12. However, it is difficult to completely insulate inter-cell member 22. In the present exemplary embodiment, in such a case, heat radiator 30 receives a part of the heat and diffuses the heat, so that it is possible to suppress the heat of battery 12 that has become high temperature due to the abnormality from moving to peripheral batteries 12. Therefore, it is possible to effectively prevent peripheral batteries 12 from having a high temperature and becoming abnormal.

Fig. 3 is a sectional view showing a peripheral portion of one battery 12 of inter-cell member 22. In this manner, in battery 12 at a center, six batteries 12 are located around battery 12 at the center and are configured to fill a gap with each battery. Small holes 20 are disposed at intermediate positions between adjacent batteries 12.

As shown in Fig. 1, inter-cell member 22 is also located outside peripheral batteries 12, but small hole 20 is not provided here, and rod 32 of heat radiator 30 is not disposed. This is because case 50 is located outside peripheral batteries 12, and heat is transferred to case 50. However, in the power storage module of the present disclosure, rod 32 may also be disposed outside peripheral batteries 12.

### "Another configuration example"

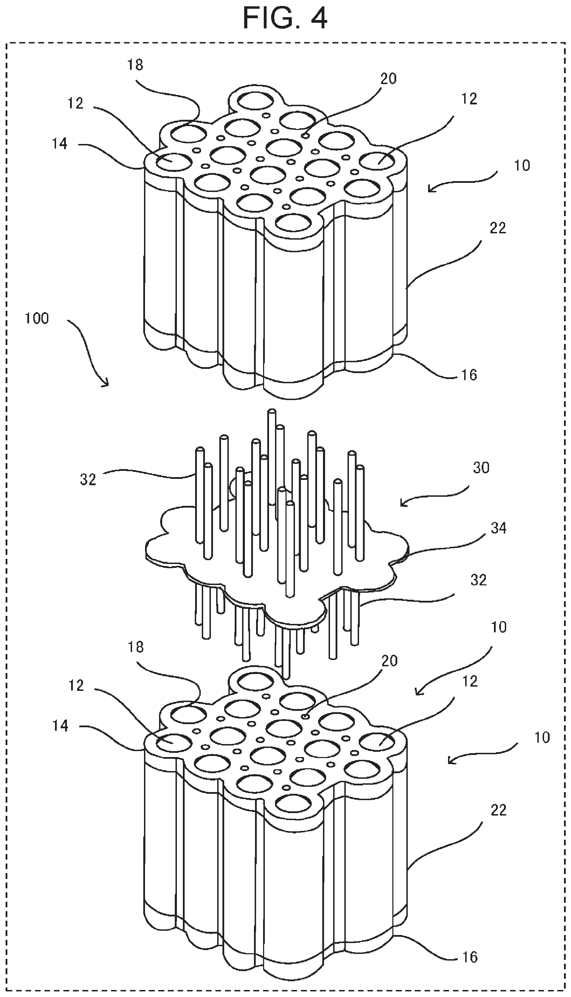

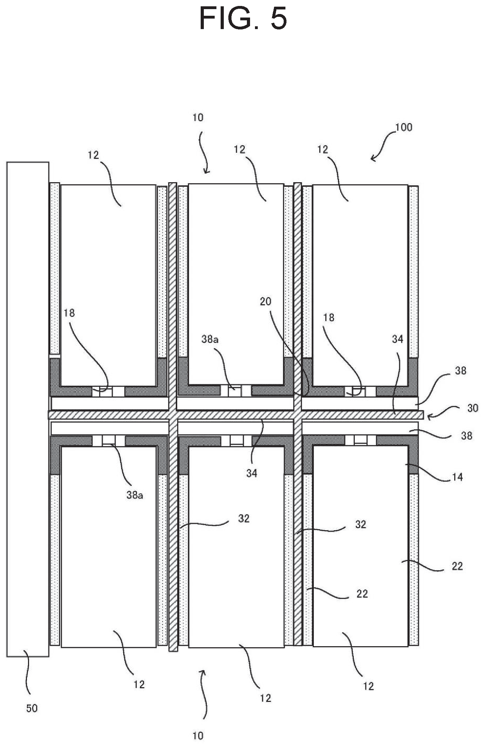

Fig. 4 is an exploded perspective view showing a main part of another configuration example, and Fig. 5 is a sectional view of the main part. In Fig. 4, current collector 38 is not shown.

In this example, two battery blocks (first group, second group) are disposed with flat plate 34 of heat radiator 30 interposed therebetween. Therefore, in heat radiator 30, rod 32 extends from both sides of flat plate 34. For example, rod 32 on one surface side of heat radiator 30 is inserted into one battery block 10. Thereafter, another battery block 10 is inserted into rod 32 on the other surface side of heat radiator 30. In this case, when one battery block 10 is connected such that a negative electrode side of another battery block 10 is located on a positive electrode side, connection wiring (not shown) can be simplified. In a case of connection in series in one battery block 10, current collector 38 that connects leading battery 12 of one battery block 10 in parallel and current collector 38 that connects the last battery of another battery block in parallel are only required to be connected by connection wiring.

In this example, heat radiator 30 exerts a heat radiation function as in the above case, but also exerts a function of facilitating assembly. That is, when next battery block 10 is coupled to one battery block 10, if heat radiator 30 is inserted into one battery block 10, next battery block 10 can be easily positioned.

### "Configuration of rod"

In the above example, rod 32 of heat radiator 30 is, for example, an elongated cylinder. However, the rod may have irregularities on its outer peripheral surface. Rod 32 may have another shape having a polygonal columnar cross section or the like.

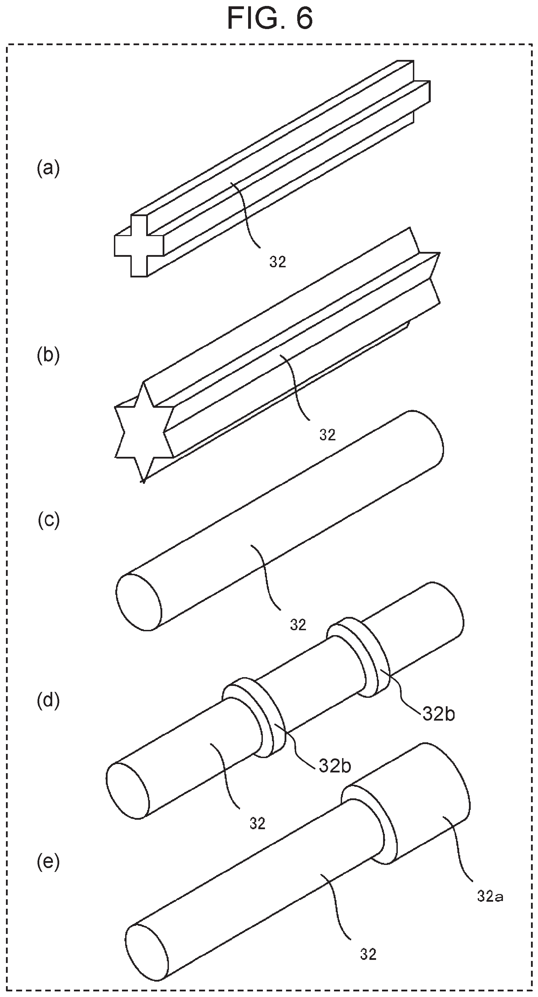

Fig. 6 is a perspective view showing a modification of rod 32. (a) has a cross section in a cross shape, (b) has a cross section in a star shape, (c) is a cylinder having a circular cross section, (d) has a shape in which ring-shaped bulging portion 32b having a slightly large diameter is formed on an outer surface of the cylinder and bulges radially outward at two points in a longitudinal direction, and (e) has a shape in which large-diameter portion 32a is formed at a root.

A sectional shape as in (a) and (b) makes it easy to increase a contact area of the rod with the inter-cell member, and easy to form a gap between the rod and the small hole, which can be used as a passage for gas or the like. In a case where the inter-cell member is filled by bulging portion 32b so as to cover an entire surface of the rod in (d), the contact area of the rod with the inter-cell member can be increased. Alternatively, in a case where a hole in the inter-cell member is formed and the rod in (d) is inserted into the hole, the contact area between the inter-cell member and a contact member can be reduced, and heat can be prevented from being transferred to the adjacent power storage device through the rod. In a case where a portion other than the bulging portion in the rod in (d) is thinner than the rod in (c), the movement of rod 32 in the longitudinal direction can be restricted. As described above, in (e), large-diameter portion 32a allows a predetermined space to be held between the holder and flat plate 34 of heat radiator 30.

In any case, inter-cell member 22 preferably has elasticity to some extent and is in contact with the outer peripheral surface of rod 32 with a relatively large area. The inter-cell member may be obtained by curing a slurry-like member filled in a gap between adjacent power storage devices by a method such as drying. The inter-cell member may be a hard material. The inter-cell member may contain a heat absorbing material.

### REFERENCE MARKS IN THE DRAWINGS

- 10: battery block
- 12: battery (power storage device)
- 14: upper holder
- 16: lower holder
- 18: opening
- 20: small hole
- 22: inter-cell member
- 30: heat radiator
- 32: rod
- 32a: large-diameter portion (second region)
- 32b: bulging portion
- 32c: portion 32c (first region)
- 34: flat plate
- 38: current collector
- 38a: lead
- 50: case
- 100: battery module

## Claims

1. A power storage module that accommodates a plurality of power storage devices, the power storage module comprising:
a holder that holds the plurality of power storage devices in a state where the plurality of power storage devices are separated from each other; and
a heat radiator including
a plurality of rods each disposed between a pair of power storage devices among the plurality of power storage devices and extending in a first direction, and
a flat plate to which one end of each of the plurality of rods is connected.

2. The power storage module according to claim 1, wherein
the heat radiator contains a material having a higher thermal conductivity than a thermal conductivity of the holder.

3. The power storage module according to claim 1, wherein
a side peripheral surface of each of the plurality of rods includes a recess or a protrusion.

4. The power storage module according to claim 1, wherein
each of the plurality of rods has a first region and a second region that are arranged in the first direction,
the second region is located closer to the flat plate than the first region is, and
the second region is larger in diameter than the first region.

5. The power storage module according to claim 1, wherein
each of the plurality of power storage devices has a cylindrical shape.

6. The power storage module according to claim 1, wherein
the plurality of power storage devices are arranged along a predetermined plane, and the first direction is perpendicular to the predetermined plane.

7. The power storage module according to claim 1, further comprising
a plurality of other rods, wherein
the plurality of power storage devices includes a plurality of power storage devices of a first group and a plurality of power storage devices of a second group,
the flat plate has a first surface connected to the plurality of rods and a second surface located opposite to the first surface,
the plurality of power storage devices of the first group faces the first surface of the flat plate,
the plurality of power storage devices of the second group faces the second surface of the flat plate, and
the plurality of other rods further extends from the second surface.

8. The power storage module according to claim 1, further comprising
a case that accommodates the plurality of power storage devices, the holder, and the heat radiator, wherein
the flat plate of the heat radiator is in contact with or connected to the case.

9. The power storage module according to any one of claims 1 to 8, wherein
the holder includes:
a container that accommodates one end of each of the plurality of power storage devices; and
an inter-cell member surrounding a side surface of each of the plurality of power storage devices,
the inter-cell member is constituted by a material having lower thermal conductivity than the heat radiator, and
the plurality of rods of the heat radiator extends in the inter-cell member.
